# EUROPEAN PATENT APPLICATION

(11) **EP 2 022 380 A2**
(43) Date of publication of application: **11.02.2009**
(21) Application number: 08425537.1
(22) Date of filing: 04.08.2008
(51) Int. Cl.: A47J 31/54

(54) **Heating group for generating hot water and/or steam**

(30) Priority: 03.08.2007 IT VI20070215
(71) Applicant: HT S.p.A., 31058 Susegana (TV) (IT)
(72) Inventor: Dall'Anese, Constante, 31058 Susegana TV (IT)
(74) Representative: Iannone, Carlo Luigi

(57) **Abstract**

A heating group (1) for generating hot water and/or steam comprising a heat exchange container (2), which internally receives the water to be heated, heating means (3), contained inside the heat exchange container (2), suitable to generate hot water and/or steam. The heating means (3) include a first heat irradiator (4), arranged at a first portion (5) of the heat exchange container (2), suitable to heat the water to a first predefined temperature (T₁) and a second heat irradiator (6), communicating with the first irradiator (4), arranged at a second portion (7) of the heat exchange container (2), suitable to heat the water to a second predefined temperature (T₂) lower than the first predefined temperature (T₁).

## Description

The present invention involves a heating group for generating hot water and/or steam, suitable to be used in preferred but not exclusive way in coffee machines to get espresso, cappuccino or even more.

As known, some household appliances, such as coffee machines, water boilers, dishwashers and irons, and, more generally, also industrial equipment which, in order to operate, need to produce hot water and/or steam, provide a heating group which rises to an appropriate value the temperature of a certain water discharge to produce steam or hot drinks such as espresso, cappuccino, tea and so on.

According to an embodiment currently on the market, the group includes a heat exchange container, better known as boiler, which contains the water to be heated and houses inside heating means, usually an immersion type resistor, so-called hardened or "at cartridge", electrically connected with the electricity power network.

The heating means turn electric energy into thermal energy transferring it by conduction to the water present into the heat exchange container.

The heating groups under review, known as "single-stage", also comprise a pair of control thermostats which regulate the feeding of the heating means on the basis of the heating degree of the water which is desired to achieve.

Thus, for example, in a coffee machine, if anyone wishes to produce espresso, the feeding of the heating means is interrupted when the first thermostat detects that the water temperature reaches about 85-90°C, while if anyone need to produce cappuccino the heating means are fed until the second thermostat does not detect within the container a temperature of at least 140°C.

According to law, the cited heating groups provide an additional safety thermostat which allows to stop feeding the heating means in the event of operation anomalies, linked to an excessive rise of the temperature inside the container, usually over 220°C. Therefore, in the heating groups of this type the functioning of the heating means is regulated essentially by the thermostats, while the power spent to operate the heating means is always the same, typically around 1.000-1.200 Watt in a coffee machine.

This obviously causes a not optimal and not very efficient waste of energy, because the power needed to produce hot water at 90°C or steam at least 140°C are theoretically lower.

An alternative solution, available on the market, of heating groups remedy this problem; it is distinguished by a pair of heat exchange containers one side-by-side to another, each of which provided with its own heating means, control thermostat and safety thermostat.

In a first heat exchange container is produced hot water at a temperature of about 85-90°C, for example to get espresso in a coffee machine, while the second heat exchange container is suitable to produce steam being able to raise the temperature of the water up to more than 140°C.

In such a way, the power supplied to the heating means of each of the heat exchange containers are those actually required to produce hot water on one hand and steam on the other, still lower than that spent in case of single-stage heating groups.

Indeed, in a coffee machine with "two-stages" heating group (two separate containers) the power needed to produce hot water is about 400-500 Watt, while the power suitable to produce steam is about 800 Watt.

However, even this type of heating groups for generating hot water and/or steam present some recognized drawbacks.

Their main drawback comes from the fact that, for reaching the diversification of the aforesaid power, the equipment and the components are inevitably doubled.

In particular, it is necessary to provide a heat exchange container, a resistor and a safety thermostat additional more than the single version of the heating devices.

This involves primarily an increase in dimensions, critical aspect when considering the appliances which are intended groups at issue for which the trend is, on the contrary, to reduce the size.

In addition, a greater number of components and equipment to be assembles means an increase in time production and fitting, as well as ultimately an increase in production costs, the other factors involved being equal.

The doubling of the equipment also means an increase in absolute of failures risks and, consequently, of the repair and/or replacement interventions, often to be executed under guarantee for the buyer.

A last but not least drawback is constituted by the fact that the heat produced by the heating means which operate at higher temperature remains confined in the corresponding heat exchange container and exploited only from this to produce steam.

The present invention aims to solve the drawbacks of the known technique just complained.

In particular, the primary aim of the invention is to provide a heating group for generating hot water and/or steam which, compared with two-stages known devices, present a reduced equipment while however maintaining an high efficiency in terms of power required for the functioning.

It is a second aim of the attached invention to set a heating group for generating hot water and/or steam which can be assembled faster than the known art. Consequently, the aim of the invention is to lower with respect to the current state of the art the production costs of a heating group for generating hot water and/or steam.

It is another aim of the present invention limiting with respect to the known technique the repair and/or replacement interventions of the spare parts of a heating group for generating hot water and/or steam. It is a further aim of the invention curbing the dimensions with respect to equivalent groups of the known type, facilitating the assembly to the final apparatus to which the groups at issue are usually intended for.

A last but least aim consists in decreasing with respect to known art the power required by the heating means to bring the water to a given temperature or, in other words, shortening the time to get hot water at that temperature, the power being equal.

The aforesaid aims are achieved through a heating group for generating hot water and/or steam as the attached claim 1, to which they refer for the sake of brevity.

Other technical features of detail of the heating group of the invention are set forth in the dependent claims.

Advantageously, the heating group of the invention is more compact than equivalent known groups to which can be compared regarding the performances.

In this case, the group of the invention retains the operation mode typical of a so called "two-stage" group which provides the diversification of the power supplied to the heating means depending on whether it is desired to get hot water or steam, respect to which possesses in any case rather cut sizes.

What just explained is achieved by saving on the equipment of the heating group: thinking about for example the number of heat exchange containers, heating means in the latter contained and safety thermostats.

Still advantageously, the heating group according to the invention is easy to assemble and can be applied with extreme simplicity to a use device, such as a coffee machine.

Equally advantageously, the group according to the invention presents a production cost lower than two-stages known groups.

Furthermore, in an advantageous way, the heat produced by one of the two heat irradiators in the relevant portion of the heat exchange container is partly conveyed to the other portion.

Therefore, for example to increase the water at the temperature T₂ the second heat irradiator of the heating group takes less time than the known groups or, time being equal, requires a less amount of power since exploits the heat already possibly produced by the first irradiator with which the water reaches the temperature T₁.

The aforesaid aims and advantages will appear more obvious from the description of a preferred embodiment of the invention given by way of illustrative but not limited example with the help of the attached drawings where:
- figure 1 is a longitudinal section view of the heating group of the invention;
- figure 2 is a first particular of figure 1;
- figure 3 is a side view of a second particular of figure 1;
- figure 4 is the view of figure 3 according to the cutting plane A-A;
- figure 5 is the plan view of a third particular of figure 1;
- figure 6 is the view of figure 5 according to the cutting plane A-A;
- figure 7 is a side view of a fourth particular of figure 1;
- figure 8 is the view of figure 7 according to the cutting plane A-A;
- figure 9 is the plan view of a the fifth particular of figure 1;
- figure 10 is the view of figure 9 according to the cutting plane A-A.

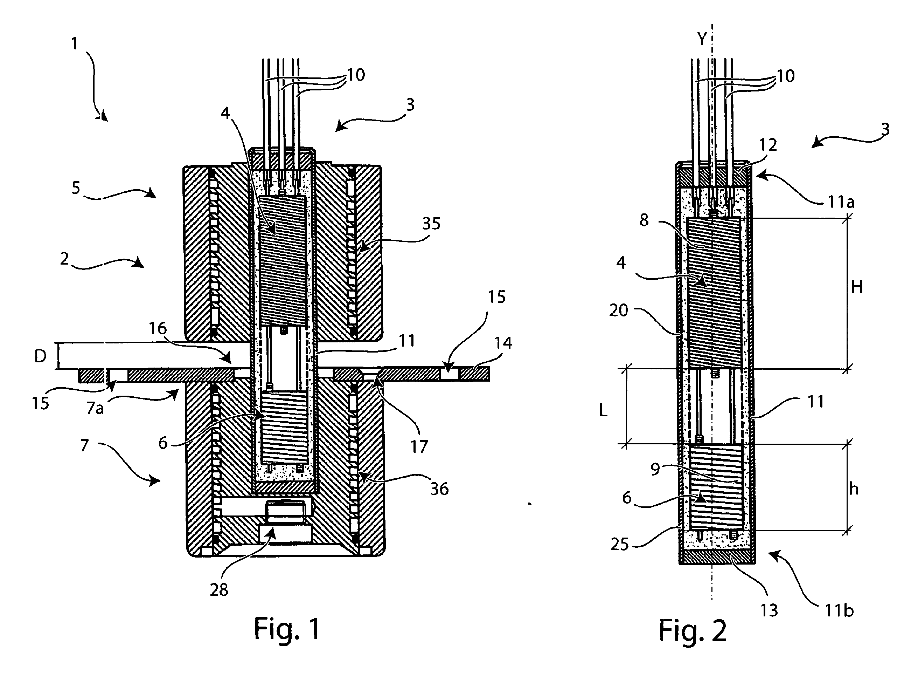

The heating group of the invention, used to generate hot water and/or steam, is represented in figure 1 globally numbered with 1.

It is used under preferential title in coffee machines but this does not leave out the installation on other domestic or industrial use equipment, such as irons or water boilers, to name a few.

It is noted that the heating group 1 comprises a heat exchange container, overall denoted with 2, internally receiving the water to be heated, not shown, and heating means, as a whole marked with 3, contained inside the heat exchange container 2.

In accordance with the invention, the heating means 3, which properly generate hot water and/or steam, include:
- a first heat irradiator 4, arranged at a first portion 5 of the heat exchange container 2, which heats the water to a first predefined temperature T₁, for example at least 140°C, producing steam;
- a second heat irradiator 6, communicating with the first heat irradiator 4 and arranged at a second portion 7 of the heat exchange container 2, which heats the water to a second predefined temperature T₂, for example 90°C, lower than the first predefined temperature T₁.

Each of the portions 5, 7 includes a control thermostat, not shown for the sake of expository convenience, which regulates the activation of the heating means 3.

Moreover, the heating group 1 also includes a single safety thermostat, not shown, coupled with a one of the portions 5, 7 of the heat exchange container 2, as known used to stop the feeding of the heating means 3, when in the portions 5 and 7, for some anomaly, the temperature reaches high values, around 200-220°C.

Furthermore, at least one of the portions 5 and 7 is externally provided with a coating shell, not shown in the drawings which follow and made of refractory material, suitable to increase the thermal insulation of the portions 5 and 7.

The first and second heat irradiators 4, 6 are electrically connected one with each other and in this case consist of resistors 8, 9, of the type in itself known to the person skilled in the art.

Each of them, in fact, is composed of a cylindrical core around which a metallic material threadlike winding is arranged, for example an alloy based on iron, chromium and tungsten.

The resistor 8 presents height H greater than the height h of the resistor 9, as evidenced by figure 2. The first heat irradiator 4 is electrically connected with the electricity power network through electrical terminals 10.

Advantageously, the first and the second heat irradiators 4, 6 are aligned and coaxial one with each other, separated by a port L of predetermined length.

The heat irradiators 4, 6 are also contained in a tubular body 11 made of metallic material having excellent properties of thermal conductivity and oxidation resistance at high temperatures.

The tubular body 11 is closed at the ends 11a, 11b by seal caps 12, 13 and defines a longitudinal axis Y in respect of which the heat irradiators 4, 6 are coaxial.

More specifically, the seal cap 12 presents a plurality of through holes, not visible, each of which receives one of the cited electrical terminals 10.

According to the preferred embodiment here described of the invention, the first portion 5 and the second portion 7 of the heat exchange container 2 are reciprocally separated by a pre-established distance D and interconnected one with each other through the tubular body 11, as still shown in figure 1.

Such a constructive sagacity avoids that during use, the first heat irradiator 4 affects the second heat irradiator 6 and causes, so, interference between the temperatures T₁ and T₂.

The pre-established distance D presents length lower than the predetermined length of the port L and depends on the powers of functioning required and, therefore, on the type of application to which heating group 1 is intended for.

Explanatory, although purely indicative, values of the distance D between the portions 4, 5 are within the range of 8÷12 mm.

Figure 1 shows also that the heating group 1 includes a connection flange 14, suitable for linking the same heating group 1 to an use device, for example, a coffee machine, through appropriate union means, not shown, inserted into cross through holes 15 made in the flange 14.

The connection flange 14 is interposed between the portion 5 and 7 of the heat exchange container 2 and has a central through hole 16 which allows the passage of the tubular body 11.

The connection flange 14 is coupled with the peripheral edge 7a of the second portion 7 of the heat exchange container 2 through connection means, overall reported with 17 and of the type in itself known.

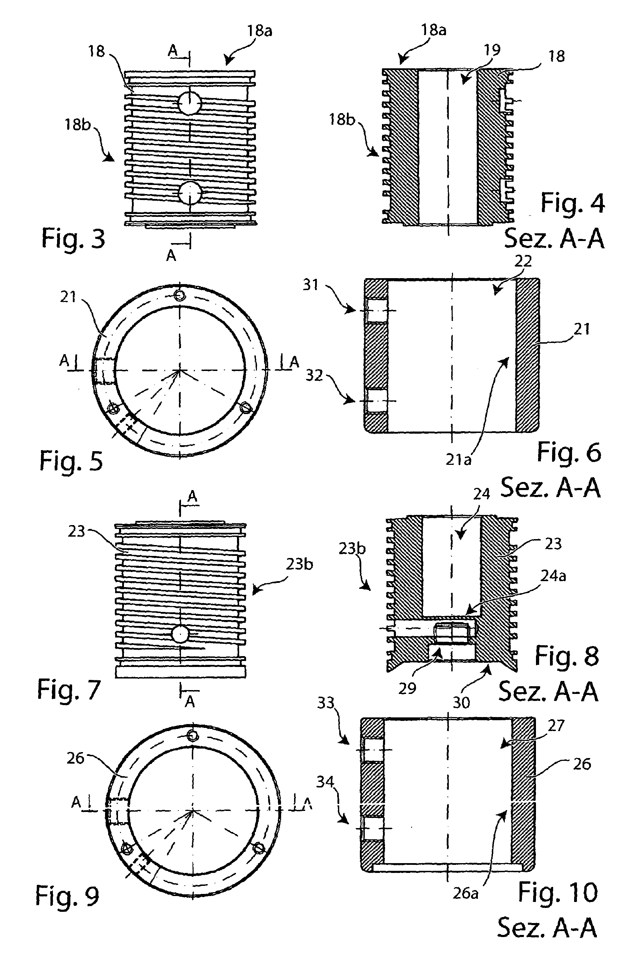

Preferably but not necessarily, the first portion 5 of the heat exchange container 2 includes:
- a first insert 18 - see figures 3, 4 - which presents an axial through opening 19 and receives a first section 20 of the tubular body 11 in which the first heat irradiator 4 is housed;
- a shaped capsule 21 - see figures 5, 6 - which has a first axial through hole 22 into which is inserted the first insert 18 so as to be totally surrounded by the shaped capsule 21 with which is coupled by fastening means, not visible.

The tubular body 11 protrudes for the first end 11a from the side edge 18a of the first insert 18.

In turn, the second portion 7 of the heat exchange container 2 includes:
- a second insert 23 - see figures 7, 8 - which has an axial blind seat 24 receiving a second section 25 of the tubular body 11 in which the second heat irradiator 6 is housed;
- a shaped cap 26 - see figures 9, 10 - which has a second axial through hole 27 in which is received the second insert 23 which is totally surrounded by the shaped cap 26 with which is coupled by fastening means, as a whole marked with 28 in figure 1.

The fastening means 28 are constituted, for example, by a screw whose stem engages in a thread nut 29 made in the second insert 23 and whose head is housed in an annular groove 30 made in the seconds insert 30.

The tubular body 11 positions with a second end 11b close to the transverse bottom 24a bounding the axial blind seat 24.

The axial seat 24 of the second insert 23 develops coaxially to the axial through opening 19 of the first insert 18.

Preferably, the shaped capsule 21 and the shaped cap 26 present in cross section circular profiles with outer diameters one equal to another.

In addition, the shaped capsule 21 presents a first radial through mouth 31 for the inlet of the water to be heated and a second radial through mouth 32 for the outlet of the steam.

The shaped cap 26 presents a third radial through mouth 33 for the inlet of the water to be heated and a fourth radial through mouth 34 for the outlet of the hot water.

The heating group 1 also comprises a pair of articulated circuits 35, 36 for the passage of the water to be heated, clearly visible in figure 1, one for each of the portions 5, 7.

The articulated circuit 35 is defined between the outer wall 18b of the first insert 18 and the inner wall 21a of the shaped capsule 21 for the first portion 5 of the heat exchange container 2.

The articulated circuit 36 is defined between the outer wall 23b of the second insert 23 and the inner wall 26a of the shaped cap 26 for the second portion 7 of the heat exchange container 2.

In the specific case, each of the articulated circuits 35, 36 consists of a spiroid groove made respectively in the outer wall 18b, 23b of the first insert 18 and the second insert 23.

These articulated circuits 35, 36 permit, as known, to increase the turbulence of the water which flows inside them and, consequently, the heat exchange with the heating means 3.

In use, assuming a fully functioning of the heating group 1, so simultaneously both of the first heat irradiator 4 and the second heat irradiator 5, in the portion 5 of the heat exchange container 2 the temperature T₂ of the steam remains above 145-150°C for some minutes, while in the portion 7 the temperature T₁ of the water remains above 80°C for a wider period of time, about 30 minutes.

Therefore, for an indicative period of time of 10-15 minutes, the heating group 1 is able to supply both steam, for example to produce a cappuccino, and hot water to produce an espresso in a coffee machine.

After 10-15 minutes, the first heat irradiator 4 is necessarily fed, providing a power of about 800 Watt for a very short timeframe, so that the temperature T₂ rises to around 200°C and stays for another 10-15 minutes to values suitable for the production of steam.

The specific construction of the heating group 1, with the two heat irradiators 4, 6 between their distinct and separated but communicating, allows that, as a result of the feeding of the first irradiator 4, part of the heat reaches the second portion 7, slowing down the decrease of the temperature T₂ of the water and postponing the moment in which the second heat irradiator 6 must be fed.

In fact, after about 30 minutes from the initial reference instant, also the second heat irradiator 6 must be fed, providing a power yet almost instantaneous little higher than 400 Watt, which brings back the temperature T₂ to values higher than 100°C and, however, to values suitable for the production of hot water for a further period of time of about 30 minutes.

The distinctive feature of the heating group 1 lies, then, in the fact that the heat irradiators 4, 6 are in communication one with another: this ensures that when one of them starts functioning a part of the heat produced is transferred to the other and exploited in the subsequent operation, with consequent savings of time or power to obtain the desired result compared with equivalent groups of the known type.

The heating group according to the invention, thanks to the particular configuration of its components, it is also very compact and reaches a high efficiency since the heat losses are limited.

In conclusion, on the basis of the description given it is clearly deducted that the heating group of the invention reaches the purposes and realizes the advantages previously mentioned.

In terms of execution, changes to the heating group of the invention could be made consisting, for example, in a different constructive form of the heat exchange container where the first and second portion may belong to a single body while remaining distinct and separated one from each other.

The control and safety thermostats could be associated with portions of the heat exchange container in the most congenial points chosen by the manufacturer, for example in special slits made in the outer wall of the shaped capsule and the shaped cap previously mentioned.

Obviously, the heating group according to the invention will be operatively connected with a logic processing and control unit which runs the functioning thereof.

It is, finally, clear that numerous other variations can be implemented to the heating group in question, without for this reason going out of the novelty principles inherent to the inventive idea, as it is clear that, in the practical implementation of the invention, materials, shapes and sizes of the details could be any, depending on the needs, and could be replaced with others technically equivalent.

## Claims

1. Heating group (1) for generating hot water and/or steam comprising at least one heat exchange container (2) suitable to receive inside said water to be heated, and heating means (3), contained inside said heat exchange container (2), suitable to generate said hot water and/or steam, **characterized in that** said heating means (3) include:
- a first heat irradiator (4), arranged at a first portion (5) of said heat exchange container (2), suitable to heat said water to a first predefined temperature (T₁);
- a second heat irradiator (6), in communication with said first irradiator (4), arranged at a second portion (7) of said heat exchange container (2), suitable to heat said water to a second predefined temperature (T₂) lower than said first predefined temperature (T₁).

2. Group (1) as claim 1) **characterized in that** said first and second heat irradiators (4, 6) are electrically connected one with each other and consist of resistors (8, 9), said first heat irradiator (4) being electrically connected with the electricity power network through electrical terminals (10).

3. Group (1) as any of the previous claims **characterized in that** said first and second heat irradiators (4, 6) are aligned and coaxial one to each other, separated by a port (L) of predetermined length.

4. Group (1) as claim 3) **characterized in that** said first and second heat irradiators (4, 6) are contained in a tubular body (11), closed at both ends by seal caps (12, 13), defining a longitudinal axis (Y) with respect to which said heat irradiators (4, 6) are coaxial.

5. Group (1) as claim 4) **characterized in that** one of said seal caps (12, 13) presents a plurality of through holes each of which receives one of said electrical terminals (10).

6. Group (1) as claim 4) **characterized in that** said first (5) and second portion (7) of said heat exchange container (2) are reciprocally separated by a pre-established distance (D) and interconnected one with each other by means of said tubular body (11).

7. Group (1) as claim 6) **characterized in that** said pre-established distance (D) has a length lower than said predetermined length of said port (L).

8. Group (1) as claim 4) **characterized in that** said first portion (5) of said heat exchange container (2) includes:
- a first insert (18) having an axial through opening (19) receiving a first section (20) of said tubular body (11) in which said first heat irradiator (4) is housed;
- a shaped capsule (21) having a first axial through hole (22) into which is inserted said first insert (18) which is totally surrounded by said shaped capsule (21) with which is coupled by fastening means.

9. Group (1) as claim 8) **characterized in that** said tubular body (11) protrudes for a first end (11a) from the side edge (18a) of said first insert (18).

10. Group (1) as claim 8) **characterized in that** said second portion (7) of said heat exchange container (2) includes:
- a second insert (23) having an axial blind seat (24) receiving a second section (25) of said tubular body (11) in which said second heat irradiator (6) is housed;
- a shaped cap (26) having a second axial through hole (27) in which is received said second insert (23) which is totally surrounded by said shaped cap (26) with which is coupled by fastening means (28).

11. Group (1) as claim 10) **characterized in that** said tubular body (11) positions with a second end (11b) close to the transverse bottom (24a) bounding said axial blind seat (24).

12. Group (1) as claim 10) **characterized in that** said axial seat (24) of said second insert (23) develops coaxially to said axial opening (19) of said first insert (18).

13. Group (1) as claim 10) **characterized in that** said shaped capsule (21) presents a first radial through mouth (31) for the inlet of said water to be heated and a second radial through mouth (32) for the outlet of said steam and said shaped cap (23) presents a third radial through mouth (33) for the inlet of said water to be heated and a fourth radial through mouth (34) for the outlet of said hot water.

14. Group (1) as claim 12) **characterized in that** it comprises a pair of articulated circuits (35, 36) for the passage of the water to be heated, one defined between the outer wall (18b) of said first insert (18) and the inner wall (21a) of said shaped capsule (21) for said first portion (5) of said container (2) and the other one between the outer wall (23b) of said second insert (23) and the inner wall (26a) of said shaped cap (26) for said second portion (7) of said container (2).

15. Group (1) as claim 4) **characterized in that** it includes a connection flange (14), suitable to link said heating group (1) to an use device and interposed between said portions (5, 7) of said heat exchange container (2).

16. Group (1) as claim 15) **characterized in that** said connection flange (14) has a central through hole (16) for the passage of said tubular body (11) and is coupled with the peripheral edge (7a) of said second portion (7) of said heat exchange container (2) through connecting means (17).

17. Group (1) as claim 11) **characterized in that** said shaped capsule (18) and said shaped cap (26) present in cross section circular profiles having outer diameters equal one each other.

18. Group (1) as claim 1) **characterized in that** at least one of said portions (5, 7) is externally provided with a coating shell suitable to increase the thermal insulation of said portions (5, 7).

19. Group (1) as claim 1) **characterized in that** each of said portions (5, 7) includes a control thermostat suitable to regulate the activation of said heating means (3).

20. Group (1) as claim 1) **characterized in that** it includes a safety thermostat coupled with one between said first (5) and second portion (7) of said heat exchange container (2).
